Europäisches Patentamt

European Patent Office

Office européen des brevets

(19)

(11) Veröffentlichungsnummer: **0 636 858 A1**

## (12) EUROPÄISCHE PATENTANMELDUNG

(21) Anmeldenummer: **94109650.5**

(22) Anmeldetag: **22.06.94**

(51) Int. Cl.⁶: **G01B 9/02**, G01D 5/26

(30) Priorität: **31.07.93 DE 4325758**

(43) Veröffentlichungstag der Anmeldung:
**01.02.95 Patentblatt 95/05**

(84) Benannte Vertragsstaaten:
**AT CH DE FR GB IT LI**

(71) Anmelder: **JENOPTIK GmbH**
**Carl-Zeiss-Strasse 1**
**D-07743 Jena (DE)**

(72) Erfinder: **Dammann, Erhard**

Frauengasse 14
D-07743 Jena (DE)
Erfinder: **Bauer, Jürgen**
**Helene-Weigel-Strasse 20**
D-07745 Jena (DE)

(74) Vertreter: **Geyer, Werner et al**
**Patentanwälte**
**Geyer, Fehners & Partner,**
**Perhamerstrasse 31**
**D-80687 München (DE)**

(54) **Phasenmoduliertes Interferometer.**

(57) Die Erfindung betrifft ein phasenmoduliertes Interferometer zur Auswertung von Phasenverschiebungen aufgrund von Änderungen optischer Weglängen im Meßarm des Interferometers.

Die Aufgabe, ein phasenmoduliertes Interferometer zu realisieren, das die bei Längenmeßsystemen üblichen sin-cos-Signale erzeugt und diese als herkömmliche Schnittstelle zur Verfügung stellt, wird erfindungsgemäß gelöst, indem bei sinusförmiger Ansteuerung des Phasenmodulators (11) dem aufgespaltenen Überlagerungssignal aus dem Referenz- (12) und dem Meßarm (13) jeweils separat und parallel zueinander Sinussignale der Form $\sin[-(2n-1)\omega t]$ und $\cos(2m\,\omega t)$, die mit dem Ansteuersignal des Phasenmodulators phasen- und frequenzstarr gekoppelt sind, beigemischt werden und nach einer Filterung mittels zweier Tiefpaßfilter (51, 52) an einer Schnittstelle (5) die herkömmlichen Quadratursignale zur Verfügung stehen.

Die Erfindung wird vorzugsweise für Präzisionslängenmeßsysteme auf heterodyner Auswertebasis verwendet.

Fig. 1

EP 0 636 858 A1

Die Erfindung betrifft ein phasenmoduliertes Interferometer zur Auswertung von Phasenverschiebungen aufgrund von Änderungen optischer Weglangen im Meßarm des Interferometers. Insbesondere findet sie Anwendung für Präzisionslängenmeßsysteme, die vorzugsweise das Heterodynverfahren zur Auswertung verwenden.

Präzisionslängenmeßsysteme, basierend auf Interferometern, sind seit Einführung des Lasers bekannt. Prinzipiell wird zwischen homodynen und heterodynen Auswerteverfahren unterschieden. Heterodynverfahren werden im allgemeinen bevorzugt aufgrund ihrer Möglichkeit des Vor- und Rückwärtszählens und der infolge verschwindenden Gleichlichtanteils hohen Interpolation. Derzeit wird ausschließlich die Einseitenbanddetektion zur Auswertung genutzt. Zur Erzeugung eines Seitenbandes bzw. zur räumlichen Trennung der Seitenbänder werden Zeemann-Aufspaltung oder Braggablenkung genutzt. Bei integrierten optischen Heterodyninterferometern kann neben der Strahlteilung und -rekombination auch eine Frequenz- oder Phasenmodulation vorgenommen werden. Wegen der Stabilität und der aufwendigen Abbildung von monomodigen Streifenwellenleitern auf Schichtwellenleitern und umgekehrt mit Hilfe von Tapern, Linsen oder Gittern werden Interferometer mit durchgehenden Streifenwellenleitern angestrebt. Dadurch entfällt jedoch die akustooptische Braggablenkung zur räumlichen Trennung der Seitenbänder. Auf der Grundlage des elektrooptischen Effekts läßt sich im Streifenwellenleiter eine Phasenmodulation realisieren. Bei genau definierter elektrischer Ansteuerung des Modulators kann eine Seitenbandunterdrückung erreicht werden. So beschreibt VOGES u.a. in IEEE Journ. Quant. Electr. QE-18 (1982), S. 124-129 eine definierte elektrische Ansteuerung des Modulators durch Sägezahnimpulse mit definiertem Rücklauf und erreicht damit eine Seitenbandunterdrückung von 40 dB.

Die Erzeugung solcher Ansteuersignale ist jedoch aufwendig und erfordert sehr hohen Regelaufwand.

Außerdem verwenden alle auf dem Markt gängigen Längenmeßsysteme, wie auch Interferometer, sin-cos-Ausgänge als Standardschnittstelle für eine nachfolgende Vor-/Rückwärtserkennung. Diese Schnittstelle hat sich in den letzten Jahren bei den Anwendern durchgesetzt, wobei die sin-cos-Signale als Rechteckimpulse oder als Analogsignale zur Verfügung gestellt werden. Die heterodyne Auswertung von Interferometern beinhaltet jedoch bereits die Vor-/Rückwärtserkennung und liefert keine sin-cos-Signale, wodurch die o. g. Schnittstelle nicht zur Verfügung gestellt werden kann.

Der Erfindung liegt deshalb die Aufgabe zugrunde, ein phasenmoduliertes Interferometer zu realisieren, das die herkömmlichen sin-cos-Signale erzeugt und diese als übliche Schnittstelle zur Verfügung stellt.

Die Aufgabe wird erfindungsgemäß bei einen phasenmodulierten Interferometer mit Meßarm und Referenzarm, in dem in mindestens einem der Interferometerarme ein Phasenmodulator zur Phasenmodulation der optischen Strahlung angeordnet ist und in dem ein Detektor zur Aufnahme eines optischen Überlagerungssignals aus Meß- und Referenzarm vorhanden ist, wobei dem Detektor eine Auswerteelektronik zur Ermittlung der Phasenverschiebung des Meßarm-Signals nachgeordnet ist, dadurch gelöst, daß im Signalweg des Überlagerungssignals Mittel zur parallelen Multiplikation mit Sinussignalen vorhanden sind, wobei diese Sinussignale phasen- und frequenzstarr mit einem ebenfalls sinusförmigen Ansteuersignal des Phasenmodulators gekoppelt sind und in zwei aufgespaltenen Signalwegen getrennt, parallel dem Überlagerungssignal beigemischt werden, daß die Sinussignale die allgemeine Form

$$S_1 = \sin [(2n-1)\omega t] \text{ und}$$
$$S_2 = \cos (2m\,\omega t) \text{ mit } m,n = 1,2,3...$$

aufweisen, wobei $\omega$ die Frequenz des sinusförmigen Ansteuersignals am Phasenmodulator ist, und daß den Mitteln zur parallelen Multiplikation nachfolgend jeweils ein Tiefpaßfilter angeordnet ist, dessen Ausgänge Gleichlichtanteile der Form

$$S_{gl1} = J_{2n-1} (2\Phi) \sin 2kx \text{ und}$$
$$S_{gl2} = J_{2m} (2\Phi) \cos 2kx \text{ } m,n = 1,2,3...$$

liefern, wobei die $J_i$ - Besselfunktionen i-ter Ordnung, $\Phi$ die geeignet eingestellte Modulationstiefe am Phasenmodulator, k die Wellen und x die Ortskoordinate sind und die Gleichlichtanteile herkömmliche Quadratursignale darstellen, die in bekannter Weise auf Phasenverschiebung analysierbar sind und auf eine übliche sin-cos-Schnittstelle geführt werden.

Um an der sin-cos-Schnittstelle die gewünschten üblichen Quadratursignale zu erhalten, wird der Phasenmodulator zweckmäßig so eingestellt, daß er seinen Arbeitspunkt durch Wahl der Modulationstiefe bei $J_{2n-1}$ $(2\Phi) = J_{2m} (2\Phi)$ hat, wobei m und n mit den Werten aus den obigen Gleichungen übereinstimmen.

Die Mittel zur parallelen Multiplikation sind Vorzugsweise so beschaltet, daß das eine mit einem Sinusgenerator in Verbindung steht, und das andere gemeinsam mit dem Phasenmodulator über einen Frequenzteiler

mit $\pi/2$-Phasenverschiebung mit demselben Sinusgenerator verbunden ist.

Vorzugsweise sind die Mittel zur Multiplikation dem Detektor folgende Multiplizierer, wobei jedem Multiplizierer ein Tiefpaßfilter nachgeordnet ist.

Zweckmäßig können jedoch auch integriert-optische Modulatoren und Phasenschieber im aufgespaltenem Lichtweg des Überlagerungssignals vor zwei separaten Detektoren angeordnet sein, wobei die optischen Modulatoren die Beimischung der Sinus- und Kosinussignale zum Überlagerungssignal des Interferometers übernehmen.

Der Grundgedanke der Erfindung basiert auf der Überlegung, durch eine reine Sinusmodulation des Phasenmodulators eines Interferometers zu in üblicher Weise auswertbaren sin-cos-Signalen zu gelangen. Dazu erfolgt die Sinusansteuerung mit einem Signal der Form

$$\phi\,(t) = \Phi\,\omega t,$$

wobei $\phi\,(t)$ das Modulationssignal, $\Phi$ der Phasenhub (die Amplitude), $\omega$ die Modulationsfrequenz und $t$ die Zeit bedeuten. Diese Ansteuerung führt zur Anregung von Seitenbändern im Spektrum des Detektors

$$S\,(t) = 1 + \sin 2kx \sum_{n=1} J_{2n-1} \sin\left[(2n-1)\omega t\right] + \cos 2kx \sum_{m=1} J_{2m} \cos\,(2m\omega t).$$

Eine direkte Auswertung dieser Seitenbänder zur Bestimmung der Phasenlage ist nicht möglich, da auch nach einer Frequenzfilterung das Signal mit einer Ortsfrequenz moduliert ist und dessen Amplitude an bestimmten Orten zu Null wird. Multipliziert man jedoch das Spektrum des Detektors mit den Signalen

$S_1 = \sin\left[(2n-1)\omega t\right]$ und $S_2 = \cos\,(2m\omega t)$ m,n = 1,2,3...

dann enthalten die Produkte

$S(t) \cdot \sin\left[(2n-1)\omega t\right] \sim \sin 2kx \cdot \sin^2\left[(2n-1)\omega t\right]$
$S(t) \cdot \cos\,(2m\omega t) \sim \cos 2kx \cdot \cos^2\,(2m\omega t)$

Gleichlichtanteile, die nach einer entsprechenden Tiefpaßfilterung die Form

$S_{sin} \sim J_{2n-1}\,(2\Phi)\,\sin 2kx$ und
$S_{cos} \sim J_{2m}\,(2\Phi)\,\cos 2kx$

haben. Diese beiden Signale können jetzt dem Anwender als sin-cos-Schnittstelle zur Verfügung gestellt werden.

Mit dem erfindungsgemäßen phasenmodulierten Interferometer ist es möglich, eine sin-cos-Schnittstelle bereitzustellen und die Phasenauswertung sowie die an die Schnittstelle anschließende Richtungserkennung in für herkömmliche Längenmeßsysteme üblicher Weise durchzuführen.

Die Erfindung soll nachstehend anhand eines Ausführungsbeispieles näher erläutert werden. Die Zeichnung zeigt:

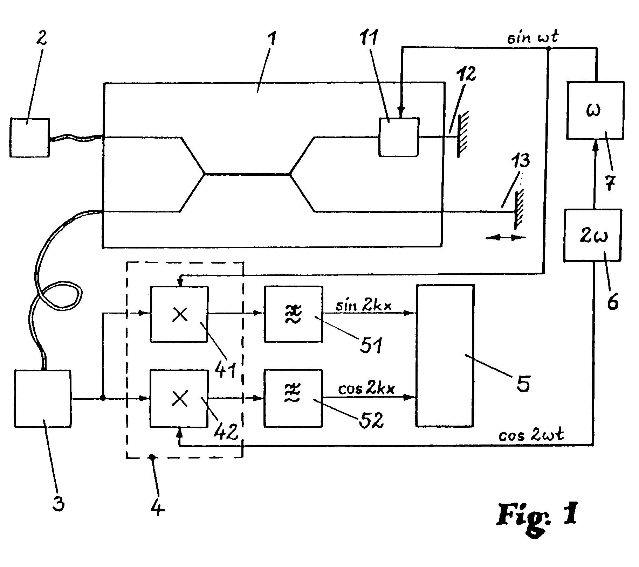

Fig. 1 eine Ausgestaltungsform des erfindungsgemäßen Interferometers.

Die erfindungsgemäße Anordnung besteht - wie Fig. 1 zu entnehmen ist - in ihrem Grundaufbau aus einem phasenmodulierten Interferometerbaustein, der vorzugsweise ein integriert-optischer Chip 1 mit einem den elektrooptischen Effekt nutzenden Phasenmodulator 11 ist, einer Lichtquelle in Form eines Lasers 2, einem Detektor 3, Mitteln zur parallelen Multiplikation 4 des Überlagerungssignales aus dem Interferometer mit Sinus- und Kosinussignalen, die mit dem Ansteuersignal des Phasenmodulators 11 phasen- und frequenzstarr gekoppelt sind, und einer sin-cos-Schnittstelle 5.

Gemäß Fig. 1 wird das vom Laser 2 kommende Licht durch die geeignet gestalteten Streifenwellenleiter des Chips 1 in Referenzarm 12 und Meßarm 13 aufgespalten. Die an den angedeuteten Reflektoren zurückgeworfenen und auf dem Chip 1 mm Überlagerungssignal zusammengeführten Lichtbündel gelangen anschließend - z.B. über eine optische Faser auf den Detektor 3. Der Detektor 3 nimmt infolge der Sinusmodulation des Phasenmodulators 11 ein Interferometersignal mit den Seitenbändern

$J_{2n-1}\,(2\Phi)\,\sin 2kx\,\sin\left[(2n-1)\,\omega t\right]$ und
$J_{2m}(2\Phi)\,\sin 2kx\,\cos\,(2m\,\omega t)$ mit m, n = 1,2,3...

auf, wobei k die Wellenzahl ($2\pi/\lambda$ mit $\lambda$ als Lichtwellenlänge des Lasers 2), x die Weglängenänderung, $J_i$ - ($2\Phi$) die Besselfunktion i-ter Ordnung und t die Zeit bedeuten. Aus Zweckmäßigkeitsgründen werden in diesem Beispiel die erste und zweite Harmonische (m = n = 1) gewählt.

Die Multiplikation dieser Seitenbänder über einen Multiplizierer 41 mit einem phasen- und frequenzstarren Sinussignal sin $\omega$t und eine nachfolgende Tiefpaßfilterung mittels des Tiefpaßfilters 51 liefern einen Gleichlichtanteil des Interferometersignals in der Form

$$J_1 (2\Phi) \sin 2kx.$$

Die im zweiten Signalweg nach dem Detektor 3 angeordneten Elemente Multiplizierer 42 und Tiefpaßfilter 52 bewirken eine Multiplikation des Interferometersignals mit einem phasen- und frequenzstarren Kosinussignal cos $2\omega$t und eine Ausfilterung des Gleichlichtanteils

$$J_2 (2\Phi) \cos 2kx.$$

Bei entsprechender Wahl des Arbeitspunktes des Phasenmodulators in Form der Modulationstiefe $\Phi$ - (Amplitude) wird die Gleichheit

$$J_1(2\Phi) = J_2 (2\Phi)$$

eingestellt, so daß an der den Tiefpaßfiltern 51 und 52 nachfolgenden Schnittstelle 5 die klassischen Quadratursignale sin 2kx und cos 2kx angeboten werden.

Fig. 1 gibt für die phasen- und frequenzstarre Kopplung des Ansteuersignals und der Multiplikationssignale die folgende Möglichkeit an. Ein Sinusgenerator 6 mit einer Grundfrequenz von $2\omega$ gibt sein Signal einerseits an einen Frequenzteiler 7 mit 90° - Phasenverschiebung ab, wobei der Frequenzteiler 7 sowohl mit dem Phasenmodulator 11 als auch mit dem Multiplizierer 41 in Verbindung steht, die beide das Signal sin $\omega$t aufnehmen. Andererseits steht der Sinusgenerator 6 mit dem Multiplizierer 42 direkt in Verbindung und liefert das Signal cos $2\omega$t. Die Signale sind somit phasen- und frequenzrichtig gekoppelt.

Eine Ausgestaltung des erfindungsgemäßen Interferometers ist bei Verwendung eines integriert-optischen Chips 1 auch durch optische Beimischung der Sinussignale zum Überlagerungssignal des Interferometers möglich. Dabei bleiben die Ansteuerprinzipien dieselben. Gegenüber von Fig. 1 werden die Mittel zur Multiplikation 4 in den optischen Signalweg des Überlagerungssignals vor dem Detektor 3 vorverlagert. Dazu sind wegen der erforderlichen Aufspaltung des Signals, die vorteilhaft auf dem Chip 1 realisiert werden kann, zwei separate Detektoren 3 notwendig. Die Mittel zur Multiplikation haben dann die Form von zwei weiteren Phasenmodulatoren, die mit den Sinussignalen

$$\sin (2n-1) \omega t \text{ und } \cos 2m \, \omega t \text{ mit } m,n = 1,2,3$$

angesteuert werden. Wegen der abnehmenden Intensität der Seitenbänder höherer Ordnung wird auch in diesem Fall zweckmäßig mit m = n = 1 zur Ausnutzung der ersten und zweiten Harmonischen aus dem Überlagerungssignal des Interferometers gearbeitet. Die phasen- und frequenzstarre Kopplung der Ansteuersignale kann damit wie in Fig. 1 erfolgen. Es ist aber auch möglich, Phasendrehung und Frequenzteilung bzw. Frequenzverdopplung auf dem Chip 1 zu integrieren, wodurch sich die externe Beschaltung des Chips verringert und somit der Interferometerbaustein eine kompakte Einheit darstellt. Wegen der hohen Kosten eines solchen speziellen integriert-optischen Chips wird jedoch vorerst die elektronische Sinussignalbeimischung gemäß Fig. 1 von größerer praktischer Bedeutung sein.

Mit der erfindungsgemäßen Lösung wird somit ein anwenderfreundliches modernes phasenmoduliertes Interferometer (mit der Möglichkeit einer heterodynen Auswertung) den herkömmlichen Schnittstellenanforderungen gerecht.

Liste der Bezugszeichen

1 Chip

11 Phasenmodulator

12 Referenzarm

13 Meßarm

2 Laser

3 Detektor

4 Mittel zur parallelen Multiplikation

41 } Multiplizierer
42 }

5 sin-cos-Schnittstelle

51 } Tiefpaßfilter
52 }

6 Sinusgenerator

7 Frequenzteiler

**Patentansprüche**

1. Phasenmoduliertes Interferometer mit Meßarm und Referenzarm, in dem in mindestens einem der Interferometerarme ein Phasenmodulator (11) zur Phasenmodulation der optischen Strahlung angeordnet ist und in dem ein Detektor (3) zur Aufnahme eines optischen Übelagerungssignals aus Meß- und Referenzarm (12;13) vorhanden ist, wobei dem Detektor (3) eine Auswerteelektronik zur Ermittlung der Phasenverschiebung des Meßarm-Signals nachgeordnet ist, dadurch gekennzeichnet, daß

   a) im Signalweg des Überlagerungssignals Mittel (4) zur parallelen Multiplikation mit Sinussignalen vorhanden sind, wobei diese Sinussignale phasen- und frequenzstarr mit einem ebenfalls sinusförmigen Ansteuersignal des Phasenmodulators (11) gekoppelt sind und in zwei aufgespaltenen Signalwegen getrennt, parallel dem Überlagerungssignal beigemischt werden,

   b) die Sinussignale die allgemeine Form

   $S_1 = \sin[(2n-1)\omega t]$ und
   $S_2 = \cos(2m\omega t)$ mit $m,n = 1,2,3\ldots$

   aufweisen, wobei $\omega$ die Frequenz des sinusförmigen Ansteuersignals am Phasenmodulator (11) ist, und

   c) den Mitteln zur parallelen Multiplikation nachfolgend jeweils Tiefpaßfilter (51,52) angeordnet sind, deren Ausgange Gleichlichtanteile der Form

   $S_{gl1} = J_{2n-1}(2\Phi) \sin 2kx$ und
   $S_{gl2} = J_{2m}(2\Phi) \cos 2kx$ $m,n = 1,2,3\ldots$

   liefern, wobei die $J_i$ - Besselfunktionen i-ter Ordnung, $\Phi$ die geeignet eingestellte Modulationstiefe am Phasenmodulator (11), k die Wellenzahl und x die Ortskoordinate sind und die Gleichlichtanteile herkömmliche Quadratursignale darstellen, die in bekannter Weise auf Phasenverschiebung analysierbar sind und auf eine übliche sin-cos-Schnittstelle geführt werden.

2. Anordnung nach Anspruch 1, dadurch gekennzeichnet
daß der Phasenmodulator (11) zum Erhalt der klassischen Quadratursignale so eingestellt ist, daß er seinen Arbeitspunkt bei Wahl der Modulationstiefe entsprechend der Gleichung

$$J_{2n-1}(2\Phi) = J_{2m}(2\Phi) \quad m,n = 1,2,\ldots$$

hat.

3. Anordnung nach Anspruch 1, dadurch gekennzeichnet,
daß eines der Mittel zur parallelen Multiplikation mit einem Sinusgenerator (6) in Verbindung steht, wobei dieser Sinusgenerator (6) andererseits über einen Frequenzteiler (7) mit $\pi/2$-Phasenverschiebung mit dem Phasenmodulator (11) und dem anderen der Mittel zur parallelen Multiplikation gekoppelt ist.

4. Anordnung nach Anspruch 1, dadurch gekennzeichnet,
daß die Mittel zur parallelen Multiplikation dem Detektor (3) nachgeordnete separate Multiplizierer (41, 42) sind, wobei jedem Multiplizierer (41, 42) ein Tiefpaßfilter (51, 52) folgt.

5. Anordnung nach Anspruch 1, dadurch gekennzeichnet,
daß die Mittel zur parallelen Multiplikation im Lichtweg vor separaten Detektoren als parallel angeordnete optische Modulatoren und Phasenschieber integriert optisch ausgeführt sind.

**Fig. 1**

**Europäisches Patentamt**

**EUROPÄISCHER RECHERCHENBERICHT**

Nummer der Anmeldung

EP 94 10 9650

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | US-A-5 212 825 (M.R. LAYTON) * Spalte 4, Zeile 16 - Spalte 6, Zeile 33; Abbildungen 1,7 * | 1-4 | G01B9/02 G01D5/26 |
| Y | | 5 | |
| | --- | | |
| Y | EP-A-0 448 751 (W. SOHLER) * Spalte 4, Zeile 53 - Spalte 6, Zeile 28; Abbildung 1 * | 5 | |
| A | | 1 | |
| | --- | | |
| A | US-A-4 583 856 (R.C. MOORE) * Anspruch 1; Abbildung 5 * ----- | 1 | |

**RECHERCHIERTE SACHGEBIETE (Int.Cl.6)**

G01B

Der vorliegende Recherchenbericht wurde für alle Patentansprüche erstellt

| Recherchenort | Abschlußdatum der Recherche | Prüfer |
|---|---|---|
| DEN HAAG | 23. November 1994 | Chapple, I |

EPO FORM 1503 03.82 (P04C03)